# EUROPEAN PATENT SPECIFICATION

(11) **EP 1 398 266 B1**
(45) Date of publication and mention of the grant of the patent: **02.04.2008**
(21) Application number: 03020726.0
(22) Date of filing: 11.09.2003
(51) Int. Cl.: B62M 25/08, B62M 23/02, B62J 6/00

(54) **Bicycle power supply**
Stromversorgung für Fahrrad
Alimentation électrique pour bicyclette

(30) Priority: 12.09.2002 JP 2002266593; 27.03.2003 JP 2003088791
(43) Date of publication of application: 17.03.2004
(73) Proprietor: SHIMANO INC., Osaka 590-8577 (JP)
(72) Inventor: Kitamura, Satoshi, Nara 636-0013 (JP); Horiuchi, Noriyuki, Osaka 577-0801 (JP)
(74) Representative: Grosse, Wolfgang

(56) References cited:
- EP-A- 1 129 930
- US-A- 4 605 240
- US-A- 6 081 434

## Description

### BACKGROUND OF THE INVENTION

The present invention is directed to bicycles and, more particularly, to a bicycle power supply with separate power storage elements.

In recent years, bicycles have been equipped with a variety of electrical components. Such electrical components include gear shift devices, suspension devices, display devices, and the control devices used to control them. For example, an automatic gear shifting device may use the signal from a speed sensor to automatically change gears in a gear shifting device based on bicycle speed. Such electrical components require power supplies for providing the electrical power needed to operate them. Conventional power supplies typically comprise batteries that must be replaced when all the power is used up, and replacing such batteries can be inconvenient. Furthermore, the electrical components become inoperable when the battery power is depleted, and this can be very inconvenient when the battery power is depleted unexpectedly while riding. To overcome this problem, some power supplies store power derived from an AC generator in a storage element such as a capacitor, and the stored power is used to operate the electrical components. Such a system is shown in Japanese Unexamined Patent Application No. 2001-245,475.

Electrical components used on bicycles include those with a relatively large capacitances, such as motors, and those with relatively small capacitances, such as controllers. Such electrical components do not operate normally when the power supply voltage falls below a certain level. For example, CPUs used in controllers may be reset when the power supply voltage falls below a certain level, thus risking the loss of data stored in an internal memory. Furthermore, when the power supply voltage drops as a result of the operation of an electrical component with a high capacitance, such as a motor, other electrical components (such as controllers) may malfunction. The operation of some electrical components also may produce electrical noise, thus causing malfunction of sensors connected to the controllers. Such noise may be caused by the sliding action of brushes in motors, switching noise caused by the operation of digital circuits, and so on.

EP-A-1 129 930 shows a bicycle power supply circuit, wherein voltage from an AV generator is stored in a first and a second storage element. The first storage element supplies power to a first electrical component, and the second storage element supply power to a second electrical component. First and second storage elements are electrically connected. If voltage of the second storage element drops, then power of the first storage element may be consumed by the second storage element and the second electrical component. Thereby a shortage of power might occur for supplying the first electrical component.

### SUMMARY OF THE INVENTION

The present invention is directed to various features of a bicycle power supply. In one embodiment, a bicycle power supply comprises first and second storage elements structured to receive power arising from an AC power supply for supplying power to first and second electrical components, respectively. A power inhibiting unit may be provided for preventing power from being communicated from the first storage element to the second electrical component and/or for preventing power from being communicated from the second storage element to the first electrical component. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a particular embodiment of a bicycle;
Fig. 2 is an enlarged oblique view of the bicycle handlebar assembly;
Figs. 3 and 4 together comprise a block diagram of a particular embodiment of a control mechanism that controls a plurality of bicycle components by using multiple power storage elements;
Fig. 5 is an external perspective view of a first control unit;
Fig. 6 is a perspective view showing front surfaces of second and third control units;
Fig. 7 is a perspective view showing back surfaces of the second and third control units;
Fig. 8 is a block diagram of another embodiment of a control unit that controls a plurality of bicycle components by using multiple power storage elements;
Fig. 9 is a block diagram of a particular embodiment of a power switch that may be used in the control unit shown in Fig. 8;
Fig. 10 is a block diagram of another embodiment of a control unit that controls a plurality of bicycle components by using multiple power storage elements;
Fig. 11 is a block diagram of another embodiment of a control unit that controls a plurality of bicycle components by using multiple power storage elements; and
Fig. 12 is a block diagram of another embodiment of a control unit that controls a plurality of bicycle components by using multiple power storage elements.

### DETAILED DESCRIPTION OF THE EMBODIMENTS

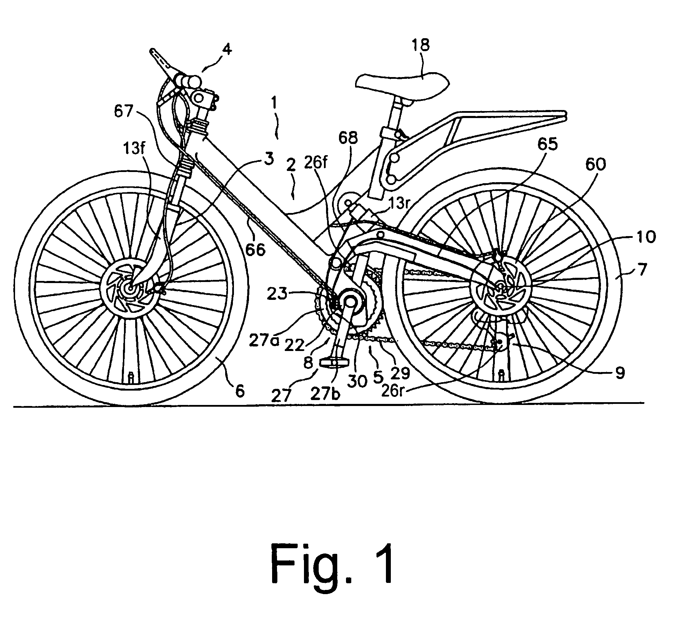

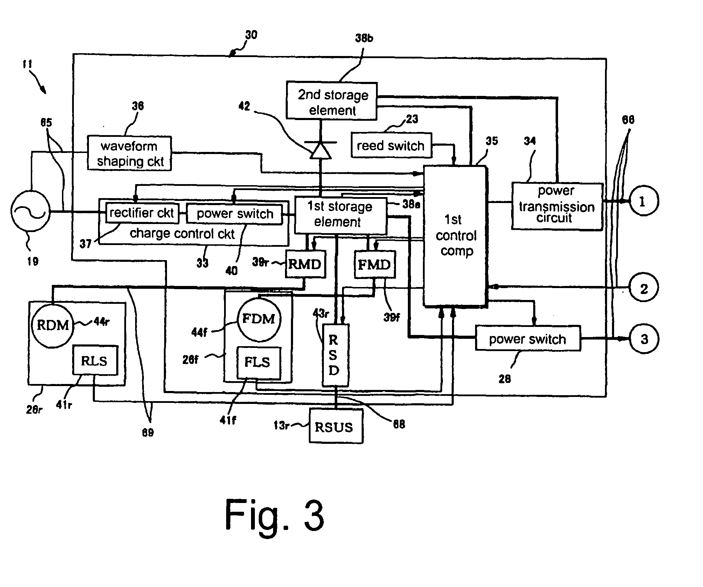

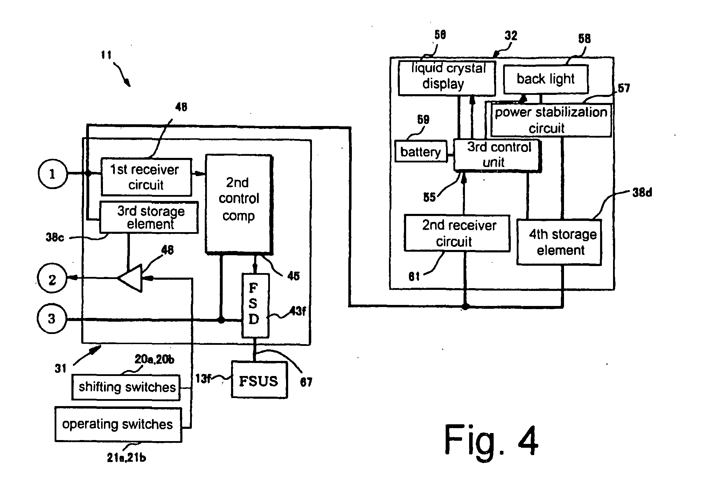

Fig. 1 is a side view of a bicycle that includes a power supply with multiple power storage elements. In this embodiment, the bicycle is a mountain bicycle comprising a frame 1 having a tubular frame body 2; a front fork 3 mounted to the front of frame body 2 for rotation around an inclined axis; a front wheel 6 rotatably mounted to front fork 3; a handlebar assembly 4 mounted to the upper portion of front fork 3; a rear wheel 7 rotatably mounted to a hub dynamo 10 at the rear portion of frame body 2, a driving portion 5 comprising front and rear gear-shift mechanisms 8 and 9; and a controller 11 (Figs. 3 and 4) for controlling various electrical components including front and rear gear-shift mechanisms 8 and 9. A front suspension 13f is mounted to front fork 3, a rear suspension 13r is mounted to the rear of frame body 2, and a saddle 18 is mounted to the middle of frame body 2.

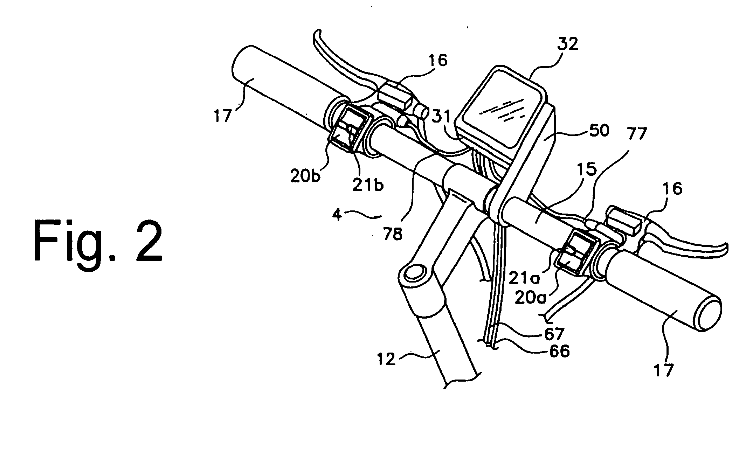

As shown in Fig. 2, handlebar assembly 4 comprises a handle stem 12 and a handlebar 15, wherein handle stem 12 is fastened to the upper portion of the front fork 3, and handlebar 15 is fastened to handle stem 12. Brake levers 16 and grips 17 are mounted at opposite ends of the handlebar 15. Gear-shift switches 20a and 20b are provided for carrying out manual gear-shift operations of the front and rear gear-shift mechanisms 8 and 9. An operating switch 21 a is provided for switching between an automatic mode and a manual mode of operation, and an operating switch 21b is provided for manually adjusting the stiffness of the front and rear suspensions 13f and 13r.

Front gear-shift mechanism 8 comprises a crank arm assembly 27 including a right side crank arm 27a and a left side crank arm 27b mounted to a crankshaft (not shown) that is rotatably mounted within a bottom bracket portion of frame body 2. A plurality of front sprockets (e.g., three sprockets) are mounted to crank arm 27a, and a front derailleur 26f is mounted to frame body 2 in close proximity to crank arm 27a for switching a chain 29 among the plurality of front sprockets. Rear gear-shift mechanism 9 comprises a plurality of rear sprockets (e.g., nine sprockets) and a rear derailleur 26r mounted to the rear of frame body 2 for switching chain 29 among the plurality of rear sprockets.

The hub dynamo 10 mounted to rear wheel 7 is adapted to mount a brake disc 60 and a freewheel to which the plurality of rear sprockets are mounted. An alternating current generator 19 (Fig. 3) is mounted inside the hub for generating power according to the rotation of the rear wheel 7.

A rotation detector 22 operates in conjunction with the left crank arm 27b for detecting the rotation of the crank arm assembly 27. Rotation detector 22 comprises a reed switch 23 mounted to frame body 2 and a plurality of (e.g., four) magnets mounted to left crank arm 27b such that the magnets are circumferentially spaced evenly with respect to the rotational axis of crank arm assembly 27. Thus, reed switch 23 outputs four pulses for each revolution of crank arm assembly 27. In this embodiment, the rotation detector 22 is used to control the operation of the front and rear externally mounted gear-shift mechanisms 8 and 9, since it is preferable that the gear-shift mechanisms be operated only when the crank arm assembly 27 is rotating. The signals from rotation detector 22 also may be used to calculate and display cadence.

Controller 11 manually controls the front and rear gear-shift mechanisms 8 and 9 and front and rear suspensions 13f and 13r in response to the operation of the gear-shift switches 20a and 20b and operating switches 21a and 21b. Controller 11 also may automatically control the front and rear gear-shift mechanisms 8 and 9 and front and rear suspensions 13f and 13r in response to the speed of the bicycle.

As shown in Figs. 3 and 4, controller 11 has a first control unit 30, a second control unit 31, and a third control unit 32. First control unit 30 may be integrally assembled with front derailleur 26 at the bottom bracket portion of frame body 2 in close proximity to the left crank arm 27b as shown in Fig. 2. First control unit 30 is connected to and is powered by alternating current generator 19 through an electrical connecting cord 65. First control unit 30 powers and controls the front derailleur 26f through internal wiring, it powers and controls the rear derailleur 26r through an electrical connecting cord 69, and it powers and controls rear suspension 13r through an electrical connecting cord 68. First control unit 30 also supplies power and control signals to the second control unit 31 and third control unit 32 through an electrical connecting cord 66.Since first control unit 30 is provided close to the alternating current generator 19, a shorter connecting cord 65 may be used, thus increasing the efficiency of signal communication.

The first control unit 30 includes a first control component 35 in the form of a microcomputer, the reed switch 23, a waveform-shaping circuit 36 for generating a speed signal derived from the output of the alternating current generator 19, a charging control circuit 33, a first storage element 38a for storing power from charging control circuit 33, a power switch 28 connected to first storage element 38a, a second storage element 38b connected to first storage element 38a through a power inhibiting unit such as a diode 42 (an example of a reverse current inhibiting unit), a power transmission circuit 34 connected to second storage element 38b, a front derailleur motor driver (FMD) 39f, a rear derailleur motor driver (RMD) 39r, a front derailleur operating location (position) sensor (FLS) 41 f, a rear derailleur operating location (position) sensor (RLS) 41r, and a rear suspension motor driver (RSD) 43r.

The charging control circuit 33 comprises a rectifier circuit 37 and a power switch 40. Rectifier circuit 37 rectifies the power output from the alternating current generator 19, and power switch 40 selectively communicates the direct current produced by rectifier circuit 37 to first storage element 38a in response to control signals from first control component 35. Power switch 40 is used to prevent excessive voltage from being stored in first storage element 38a. More specifically, first control component 35 monitors the voltage in first storage element 38a. First control component 35 outputs a signal to turn off power switch 40 when the monitored voltage is over a certain voltage (such as 7 volts), and first control component 35 outputs a signal to turn on power switch 40 when the monitored voltage is under a certain voltage (such as 5.5 volts).

The first and second-power storage elements 38a and 38b may comprise large-capacity double layer capacitors, for example, for storing the direct current power produced by charging control circuit 33. If desired, the first and/or second power storage elements 38a and 38b may comprise secondary storage batteries such as a nickel cadmium battery, lithium ion battery, nickel hydride battery, etc. instead of capacitors.

In this embodiment, the power stored in the first power storage element 38a is used primarily as a power source for electrical components that consume more power and have greater capacitance such as the suspensions 13f and 13r and the derailleurs 26f and 26r, and particularly the motor drivers 39f and 39r, the driving motors 44f and 44r used to move derailleurs 26f and 26r, the suspension motor drivers 43f (Fig. 4) and 43r, and the driving motors (not shown) used to move the front and rear suspensions 13f and 13r in accordance with control signals from first control unit 35. The power stored in the second power storage element 38b is used primarily as a power source for electrical components that consume less power and have lower capacitance such as the first control component 35 and other components described below. Diode 42 is provided so that current flows in only one direction from the first storage element 38a to the second storage element 38b without the need for further control. Current is not allowed to flow from second storage element 38b to first storage element 38a for reasons discussed below.

The first control unit 30 controls the gear shift devices 8 and 9 and the rear suspension 13 in accordance with the riding mode. More specifically, in automatic mode, the first control unit 30 performs gear shift control of the gear shift devices 8 and 9 in response to the bicycle speed and adjusts the stiffness of the rear suspension 13r in response to the bicycle speed. In manual mode, the gear shift devices 8 and 9 and the rear suspension 13r are controlled in response to the operation of the gear shift switches 20a and 20b and the operation switches 21a and 21b.

As noted above, first control unit 30 supplies power and control signals to the second control unit 31 and third control unit 32 through an electrical connecting cord 66. More specifically, electrical connecting cord 66 is connected to first control component 35 directly, to first storage element 38a through power switch 28, and to second storage element 38b through power transmission circuit 34. Power switch 28 selectively provides power from first storage element 38a to second control unit 31 in a manner discussed below. Composite power/control signals that are pulsed ON and OFF (pulse code modulated signals) are provided to second control unit 31 and third control unit 32 through power transmission circuit 34. The control signals may be formed in response to the speed signals from waveform-shaping circuit 36 as well as from distance information, derailleur position, riding mode (e.g., manual or automatic) suspension stiffness, etc. The second and third control units 31 and 32 are controlled according to the control signal components of the composite signals. The use of composite power/control signals reduces the number of wires that ordinarily would be required by providing separate power and control lines for each control element.

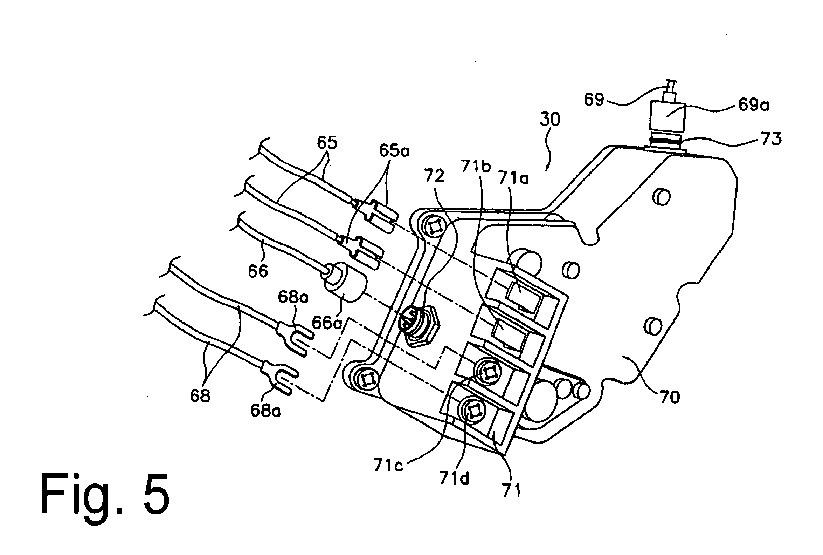

The first control unit 30 has a case 70 (Fig. 5) that houses the various electrical components discussed above. As shown in Fig. 5, case 70 includes a terminal board 71 used for mounting the connecting cords 65 and 68 and two chassis plugs 72 and 73 used for mounting the connecting cords 66 and 69, respectively. A chassis socket 66a having a plurality of (e.g., four) female terminals mounted to one end of the connecting cord 66 is connected to chassis plug 72, which has a corresponding plurality of male terminals or pins, and the other end of connecting cord 66 is connected to the second control unit 31. A chassis socket 69a mounted to one end of the connecting cord 69 is connected to chassis plug 73, and the other end of the connecting cord 69 is connected to the rear derailleur 26r.

A pair of plate-shaped male FASTON terminals 71a and 71b and a pair of screw terminals 71c and 71d are disposed on the terminal board 71. A pair of female FASTON terminals 65a that are crimped onto one end of the connecting cord 65 are connected to the male FASTON terminals 71a and 71b, and the other end of connecting cord 65 is connected to alternator 19. A pair of Y-terminals 68a that are crimped to one end of the connecting cord 68 are connected to the screw terminals 71c and 71d, and the other end of connecting cord 68 is connected to rear suspension 13. Because the terminal configurations of the connecting cord 65 connected to the alternator 19 and the connecting cord 68 connected to the rear suspension 13 are different, the connecting cords 65 and 68 cannot be mistakenly connected in place of each other. As a result, damage to the various circuits inside the first control unit 30, which could easily take place if a mistaken connection were to occur, can be prevented.

The second control unit 31 is mounted via a bracket 50 (Figs. 2, 6 and 7) to the handlebar 15 of the handlebar assembly 4. The second control unit 31 includes gear-shift switches 20a and 20b, operating switches 21a and 21b, and a buffer 48 connecting gear-shift switches 20a and 20b and operating switches 21a and 21b to electrical connecting cord 66 for providing the operating data from these components to first control component 35 in first control unit 30. Second control unit 31 also includes a second control component 45 in the form of a microcomputer and a front suspension motor driver (FSD) 43f, wherein second control component 45 and front suspension motor driver 43f are connected to power switch 28 in first control unit 30 through electrical connecting cord 66. Finally, second control unit 31 includes a first receiver circuit 46 (connected to second control component 45) and a third storage element 38c, wherein first receiver circuit 46 and third storage element 38c are connected to power transmission circuit 34 in first control unit 30 through electrical connecting cord 66.

First receiver circuit 46 extracts the control signals from the composite power/control signals from power transmission circuit 34 and supplies the control signals to second control unit 45. Third storage element 38b may be a relatively low capacity capacitor such as an electrolytic capacitor that is charged by the power component of the composite power/control signals from power transmission circuit 34 and provides smooth operating power to buffer 48.

Buffer 48 may be an operational amplifier capable of keeping the input and output voltage constant, and it is provided to stabilize the analog voltage signals from the shift switches 20a and 20b and the operating switches 21a and 21b. Because the connecting cord 66 uses crimped contacts, the structure may not be amenable to full protection, such as water-proofing, with the resulting danger of fluctuations in voltage as a result of current leakage caused by drops of water or the like. Buffer 48 can keep the input and output voltages constant despite such fluctuations, thus allowing signals with voltage stabilized by the power from the third storage element 38c to be input to the first control component 35.

Second control unit 31 operates primarily from the power received from first storage element 38a in first control unit 30 through power switch 28, and it controls the front suspension 13f according to the operating mode. More specifically, in automatic mode, second control component 45 adjusts the stiffness of the front suspension 13f through an electrical connecting cord 67 in accordance with a control signal sent from the first control unit 30 based on bicycle speed. In manual mode, second control component 45 adjusts the stiffness of the front suspension 13f in accordance with the operation of the operating switch 21b. In this embodiment, second control component 45 and the front suspension motor driver 43f operate only when the front suspension 13f is to be adjusted, and this is controlled by the first control component 35 in first control unit 30 through power switch 28. Such operation minimizes unnecessary consumption of power from first storage element 38a.

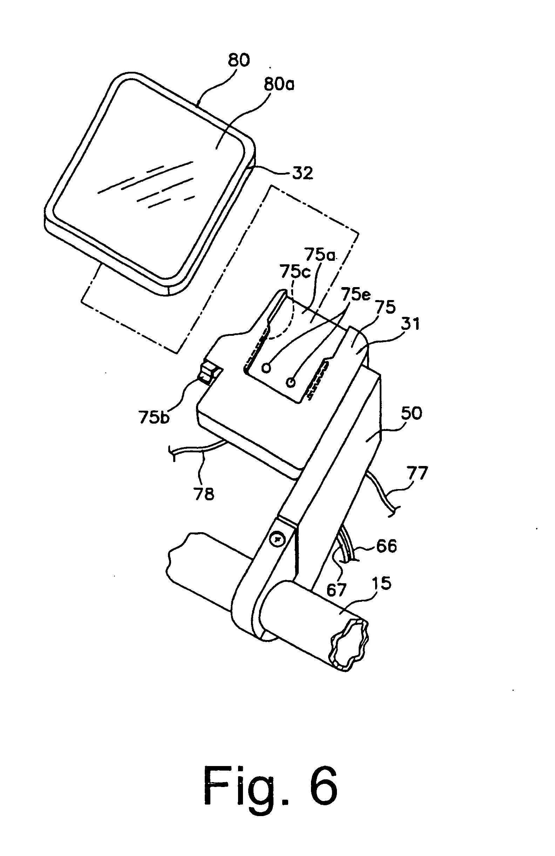

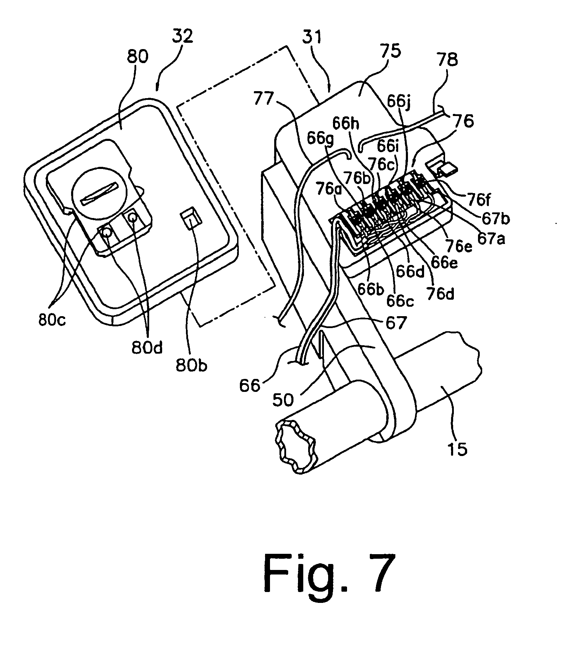

As shown in Figs. 6 and 7, the second control unit 31 has a case 75 that houses the various electrical components described above. A terminal board 76 used for mounting the connecting cords 66 and 67 is disposed on the back surface of the case 75, and six screw terminals 76a-76f are disposed on the terminal board 76.

Connecting cord 66 comprises four core wires 66g-66j. Of these core wires, the core wire 66g may be a ground wire for the other three wires. The core wire 66h may be used to supply electric power and operating data such as speed or derailleur position to the third control unit 32 from power transmission circuit 34 in first control unit 30. The core wire 66i may provide signals from the gear shift switches 20a and 20b and the operation switches 21 a and 21b, for example, to the first control unit 30 through buffer 48. In this embodiment, the current flowing through core wire 66i is an analog current having a different voltage for each switch by using a voltage divider. The core wire 66j may be used to supply electric power from power switch 28 in first control unit 30 to drive the second control component 45 and the front suspension motor driver 43f. Four Y-terminals 66b-66e that are connected to screw terminals 76a-76d are crimped onto the four core wires 66g-66j. These Y-terminals 66b-66e are crimped onto the four core wires 66g-66j after the connecting cord 66 has been sized and cut in accordance with the bicycle model configuration and/or the size of the frame body 2.

Two Y-terminals 67a and 67b that are connected to screw terminals 76e and 76f are crimped onto one end of the connecting cord 67, and the other end of the connecting cord 67 is connected to the front suspension 13f. Connecting cords 77 and 78 extend-from the case 75, wherein connecting cord 77 is connected to the gear shift switch 20a and to the operation switch 21 a, and connecting cord 78 is connected to the gear shift switch 20b and to the operation switch 21b. These cords 77 and 78 terminate at the screw terminals 76c and 76d through buffer 48.

As shown in Figs. 6 and 7, a guiding cavity 75a having a pair of notches 75c is formed on the front surface of the case 75. A locking piece 75b also is formed on the front surface of case 75. Protrusions 80c disposed on the back of a case 80 that houses the electrical components of the third control unit 32 slidingly and detachably engage the notches 75c, and a concavity 80b disposed on the back of case 80 of third control unit 32 engages with the locking piece 75b. Locking piece 75b possesses a degree of pliability that enables it to detachably engage concavity 80b. Finally, a pair of contact points 75e formed on the front surface of case 75 electrically contact a corresponding pair of contact points 80d formed on the back of case 80 of third control unit 32.

Third control unit 32 is a so-called cycle computer, and it is detachably mounted to second control unit 31 as noted above. A battery 59 (e.g., a button battery) is mounted within third control unit 32 so that third control unit 32 can operate even if it is detached from second control unit 32. Consequently, various initial settings such as the wheel diameter setting may be performed, and various data such as the distance ridden and the time ridden can be stored therein.

Third control unit 32 includes a third control component 55 in the form of a microcomputer. A liquid crystal display (LCD) unit 56, a backlight 58, a second receiving circuit 61 and a fourth storage element 38d are connected to third control component 55. Backlight 58 is coupled to fourth storage element 38d through a power stabilizing circuit 57. These electrical components are housed within case 80.

The LCD unit 56 is capable of displaying various data such as speed, cadence, travel distance, gear-shift location, suspension status and so forth through a display window 80a disposed on the front of case 80 in response to control signals received from first control unit 30, and it is illuminated by the backlight 58. Second receiver circuit 61 and fourth storage element 38d are connected to power transmission circuit 34 in first control unit 30 through electrical connecting cord 66 in parallel with first receiver circuit 46 and third storage element 38c in second control unit 31. Second receiver circuit 61 extracts the control signals from the composite power/control signals from power transmission circuit 34 and supplies the control signals to third control component 45. Fourth storage element 38d may be a relatively low capacity capacitor such as an electrolytic capacitor that is charged by the power component of the composite power/control signals and provides operating power to third control component 45 and power stabilizing circuit 57. The power stabilization circuit 57 smoothes the power derived from the composite power/control signals. Consequently, even where intermittent control signals are sent together with the power signals, there is little flickering in the backlight 58. The third control unit 32 also may function as a pedometer if it is detached from the second control unit 31. Providing a dedicated third control component 55 allows the LCD unit 56 to respond quickly to changing conditions, and the first and second control units 30 and 31 need not be used to control the LCD unit directly.

In operation, the alternating current generator 19 of the dynamo hub 10 generates electric current when the bicycle is traveling, the electric current is communicated to the first control unit 30 through the electrical connecting cord 65, and power derived from the electric current is stored in the first and second storage elements 38a and 38b. Since the generator 19 is provided on the rear wheel 7, the first and second storage elements 38a and 38b also may be charged by putting the bicycle on its stand and rotating the pedals if the charge produced by normal travel is insufficient. This is particularly helpful when adjusting the gear shift mechanisms and setting the operations of the LCD unit 56.

When the operating switches 21a and 21b or the shifting switches 20a and 20b are activated, signals with differing analog voltages are output through the buffer 48 to the first control component 35, and signals for manually controlling the derailleurs 26f and 26r, signals for manually controlling the suspensions 13f and 13r or signals for changing the mode are produced by the first control component 35.

Waveform shaping circuit 36 derives speed signals from the alternating current generator 19, thus eliminating the need for a separate speed sensor. In automatic mode, when the bicycle speed either exceeds a predetermined threshold value or falls below a predetermined threshold value, a gear shift operation is carried out. In this embodiment, the gear shift operation is carried out with priority given to the rear derailleur 26r. When the speed exceeds a predetermined threshold value in automatic mode, the stiffness of both suspensions 13f and 13r also may be increased. In the meantime, various operating parameters are displayed on LCD unit 56 with the help of backlight 58.

First control component 35 provides control signals to power transmission circuit 34 in response to data such as speed, distance, gear stage, operating mode (e.g., automatic or manual), suspension rigidity, and so on, and power transmission circuit 34 modulates the power signals from second storage element 38b to generate the composite power/control signals communicated to second control unit 31 and third control unit 32 through connecting cord 66. First control component 35 also provides control signals to power switch 28 to selectively provide power to second control component 45 and the front suspension motor driver 43f over connecting cord 66 whenever adjustment of front suspension 13f is desired. The second control component 45 is powered by the signals from first storage element 38a, and signals for controlling the front suspension 13f are derived from the control signal components of the composite power/control signals from power transmission circuit 34. In the third control component 55, the speed and other types of data derived from the control signal portion of the composite power/control signals are output to the LCD unit 56. In this embodiment, all of the components in third control unit 32 are powered and controlled by the composite power/control signals from power transmission circuit 34 which, in turn, arise from second storage element 38b.

The voltage in the first storage element 38a may drop when an electrical component having relatively large capacitance is operated. Such electrical components often include motor-driven components such as the derailleurs 26f and 26r or the suspensions 13f and 13r. If the first storage element 38a were used as the power source for all of the electrical components, there is the danger that the first control component 35, third control component 55, or liquid crystal display 56 could malfunction or be reset as a result of voltage drops when the high capacitance electrical components are operated. However, in this embodiment, second storage element 38b, which is connected to first storage element 38a by diode 42, serves as the power source for the low capacitance electrical components. The diode 42 prevents current flow from second storage element 38b towards first storage element 38a or towards the high capacitance electrical components, thus preserving the voltage at second storage element38b. Thus, the operation of the high capacitance electrical components does not affect the operation of the low capacitance electrical components. Current still flows from first storage element 38a to second storage element 38b to recharge second storage element 38b when the voltage in second storage element 38b drops, thus further enhancing stability. The first storage element 38a serves as the power source for the second control component 45, but since it is off except when the suspension 13f is being controlled, the second control component is less susceptible to the effects of decreased voltage in the first storage element 38a.

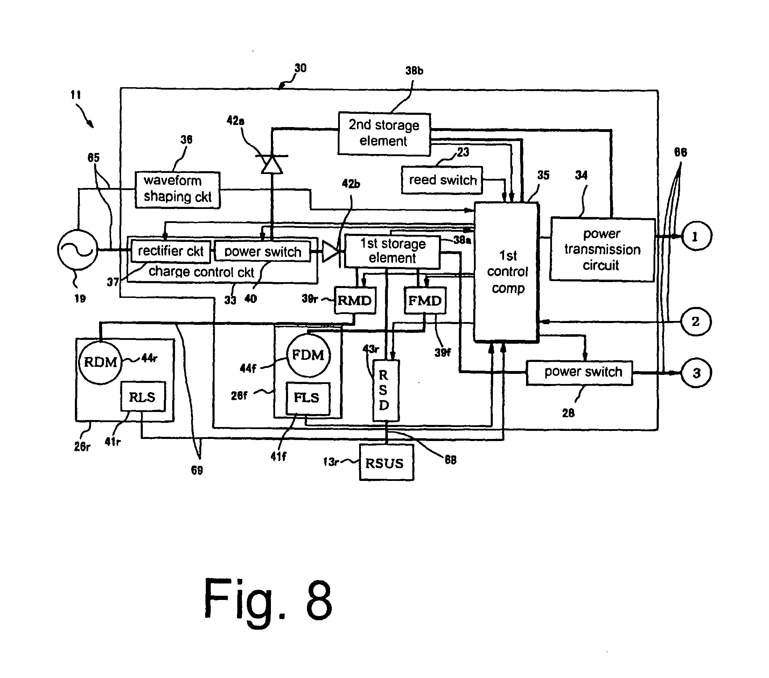

In the first embodiment described above, the first storage element 38a and second storage element 38b were connected by a diode 42. However, as shown in Fig. 8, the first and second storage elements 38a and 38b may be connected in parallel to power switch 40. Parts that are the same as those in the first embodiment will not be described again.

In this embodiment, a diode 42a is placed between the second storage element 38b and the power switch 40 to prevent current from flowing back to the first storage element 38a. Another diode 42b may be placed between the power switch 40 and first storage element 38a, but that is not necessary. This structure will result in the same effects as the first embodiment.

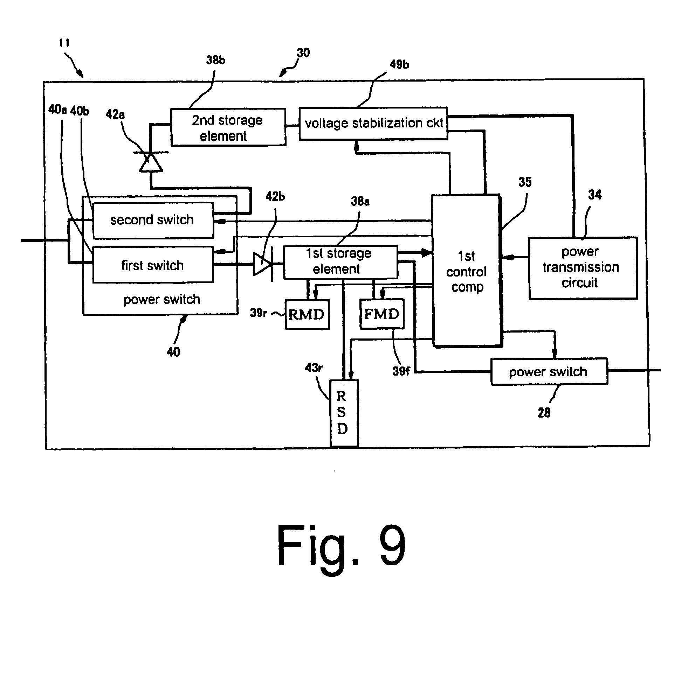

In another modification of this embodiment shown in Fig. 9, the voltage in the storage elements 38a and 38b may be individually monitored by the first control component 35, and current flow to the storage elements 38a and 38b may be individually turned on and off by two switches 40a and 40b provided in the power switch 40. A voltage stabilization circuit 49 also may be connected to the second storage element 38b, thus allowing power having constant voltage to be supplied to the electrical components in the control system despite fluctuations in voltage. The voltage stabilization circuit 49 also may be connected to the second storage element 38b in the embodiment illustrated in Fig. 4.

The first diode 42a prevents current from flowing back to the first storage element 38a from the second storage element 38b as noted above, but reverse current also may be prevented by turning off the second switch 40b in the power switch 40. That would eliminate the need for using diode 42a. The second switch 40 b may be turned off during the operation, for example, of an electrical component that is operated by power supplied from the first storage element 38a (such as the motor drivers).

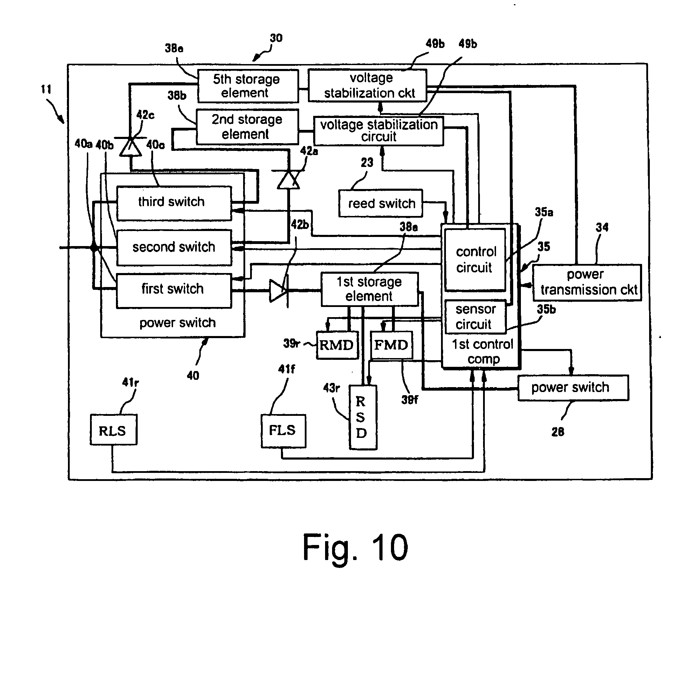

As shown in Fig. 10, the storage element used as the power source for low-capacitance electrical components may comprise split storage elements such as second storage element 38b and a fifth storage element 38e. Second storage element 38b may be used as the power source for a control circuit 35a (digital circuit) within first control component 35, and fifth storage element 38e may be used as the power source for a sensor circuit 35b that may include operating location sensors 41f and 41 for the front and rear derailleurs 26f and 26r or the reed switch 23. In this embodiment, the power switch 40 comprises three switches 40a-40c. The first switch 40a is connected to the first storage element 38a by diode 42b, the second switch 40b is connected to the second storage element 38b by diode 42a, and the third switch 40c is connected to fifth storage element 38e by a diode 42c. As a result, power can be supplied to the sensor circuit 35b from the dedicated fifth storage element 38e, thus reducing the chance that noise generated by the operation of the digital circuitry within control circuit 35a may adversely affect the operation of the sensor circuit 35b.

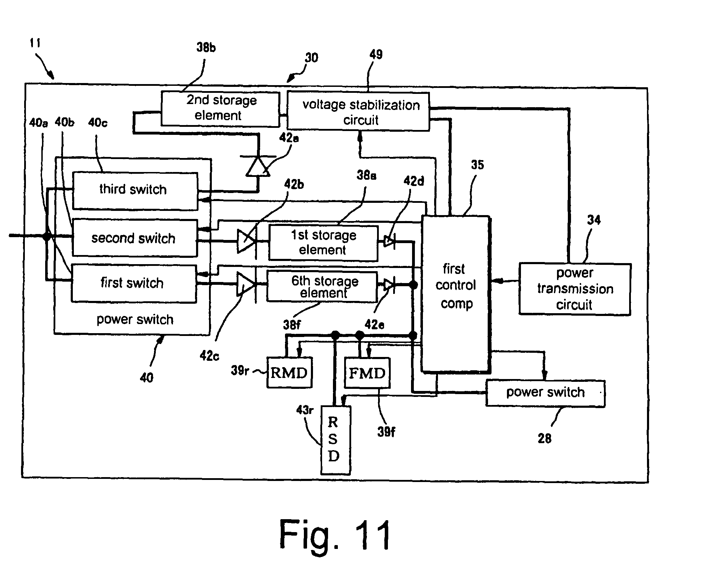

As shown in Fig. 11, the storage element serving as the power source for high-capacitance driving electrical components may comprise split storage elements such as first storage element 38a and a sixth storage element 38f. The first and sixth storage elements 38a and 38f may each comprise electric double-layer capacitors having the same capacitance. The first and sixth storage elements 38a and 38f are connected in parallel to high capacitance electrical components such as the motor drivers 39f, 39r, and 43f. Diodes 42d and 42e are connected at the output terminals of the first and sixth storage elements 38a and 38f to prevent reverse current from flowing from one storage element to the other. in this embodiment, power switch 40 comprises three switches 40a-40c. The first switch 40a is connected to the sixth storage element 38f through diode 42c, the second switch 40b is connected to the first storage element 38a through diode 42b, and the third switch 40c is connected to the second storage element 38b through diode 42a.

As a result of this construction, the sixth storage element 38f may be charged after the first storage element 38a has been charged. Charges staggered in this manner allow the first storage element 38a to rapidly store power up to the necessary voltage. The two storage elements 38a and 38f thus can be discharged for rapid supply of voltage sufficient for operation, despite low charge levels.

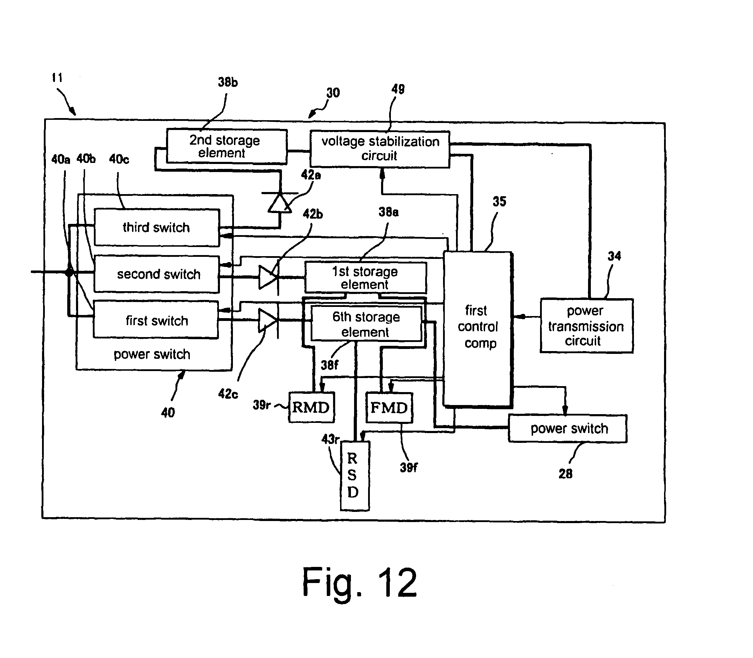

As shown in Fig. 12, the storage elements serving as power sources for the high-capacitance electrical components may be divided into split storage elements such as the first storage element 38a supplying power to the motor drivers 39f and 39r for the front and rear derailleurs 26f and 26r and a sixth storage element 38f supplying power to the motor drivers 43r and 43f (Fig. 4) for the front and rear suspensions 13f and 13r. The first and sixth storage elements 38a and 38f may comprise of electric double-layer capacitors, and first storage element 38a may have a higher capacitance since it is used more frequently for control purposes. Sixth storage element 38f is connected to the motor driver 43f (Fig. 4) through power switch 28. As a result of this construction, the high capacitance components may be reliably controlled even when the timing requires the simultaneous operation of the derailleurs 26f and 26r and the suspensions 13f and 13r.

First storage element 38a was used as the power source for the second control component 45 in the above embodiments, but the second storage element 38b may be used as the power source for the second control component 45 in other applications. Motor-driven derailleurs and suspensions were provided as examples of high capacitance electrical components in the above embodiments, but high capacitance components may include electrical components driven by an actuator, such as solenoid-driven components, or by other components whose operation may adversely affect the operation of other components.

A hub dynamo mounted on the rear hub of a bicycle was provided as an example of an AC generator in the above embodiments, but a hub dynamo mounted on the front hub and rim dynamos in contact with the rim of a wheel also may be used. No power sources for front head lights were include in the above embodiments, but AC power generated by the AC generator 19 may be used for such purposes. First control component 35 or a dedicated controller may use signals from a brightness sensor to control lighting according to ambient lighting.

The scope of the invention is limited by the appended claims.

## Claims

1. A bicycle power supply comprising:
a first storage element (38a) structured to receive power arising from an AC power
supply (19) for supplying power to a first electrical component; and
a second storage element (38b) structured to receive power from the AC power supply (19) for supplying power to a second electrical component,
**characterized in that** the power supply further comprises a power inhibiting unit (42) structured to prevent power from being communicated from the first storage element to the second electrical component.

2. The power supply according to claim 1 wherein the power inhibiting unit is structured to prevent power from being communicated from the second storage element (38 b) to the first electrical component.

3. The power supply according to any of the preceding claims further comprising a rectifier circuit (37) that converts AC current received from the AC power supply into DC current, wherein the rectifier circuit (37) is operatively coupled to supply power to the first storage element (38a) and to the second storage element (38 b).

4. The power supply according to claim 3 further comprising a reverse current inhibiting unit operatively coupled between the first storage element (38 a) and the second storage element (38 b) to inhibit current from flowing from one of the first storage element (38a) and the second storage element (38 b) to the other one of the first storage element (37 a) and the second storage element (38 b).

5. The power supply according to claim 4 wherein current flows from the first storage element (38 a) to the second storage element (38 b).

6. The power supply according to claim 5 wherein current flows from the first storage element (38 a) to the second storage element (38 b) through the reverse current inhibiting unit.

7. The power supply according to any of claims 4 to 6 further comprising a power switch unit that selectively switches current from the rectifier circuit to the first storage element (38 a) in response to a voltage of the first storage element (38 a).

8. The power supply according to any of claims 4 to 7 wherein the reverse current inhibiting unit comprises a diode (42).

9. The power supply according to any of claims 4 to 8 wherein the first and second storage elements (38 a, 38 b) are structured to provide power to the first and second electrical components such that the first electrical component has a higher capacitance than the second electrical component.

10. The power supply according to claim 9 wherein the first storage element (38 a) is structured to provide power to a mechanical adjusting mechanism.

11. The power supply according to claim 9 wherein the second storage element (38 b) is structured to provide power to a microprocessor.

12. The power supply according to any of claims 4 to 11 wherein the first and second storage elements (38 a, 38 b) receive current from the rectifier circuit (37) in parallel.

13. The power supply according to claim 12 wherein the reverse current inhibiting unit comprises:
a first reverse current inhibiting circuit operatively coupled between the rectifier circuit (37) and the first storage element (38 a); and
a second reverse current inhibiting circuit operatively coupled between the rectifier circuit (37) and the second storage element (38 b).

14. The power supply according to claim 12 or 13 wherein the first reverse current inhibiting circuit comprises a first diode, and wherein the second reverse current inhibiting circuit comprises a second diode.

15. The power supply according to any of claims 12 to 14 further comprising a power switch unit that selectively switches current from the rectifier circuit (37) to at least one of the first storage element (38 a) and the second storage element (38 b).

16. The power supply according to claim 15 wherein the reverse current inhibiting unit comprises the power switch unit.

17. The power supply according to claim 15 or 16 further comprising a voltage stabilizing circuit coupled to at least one of the first storage element (38 a) and the second storage element (38 b).

18. The power supply according to any of claims 15 to 17 wherein the power switch unit comprises:
a first power switch circuit that selectively switches current from the rectifier circuit (37) to the first storage element (38 a); and
a second power switch circuit that selectively switches current from the rectifier circuit (37) to the second storage element (38 b).

19. The power supply according to any of claims 15 to 18 wherein the reverse current inhibiting unit comprises a diode (42) coupled between the power switch unit and at least one of the first storage element (38 a) and the second storage element (38 b).

20. The power supply according to any of claims 15 to 18 wherein the reverse current inhibiting unit comprises:
a first diode (42 a) coupled between the first power switch circuit and the first storage element (38 a); and
a second diode (42 b) coupled between the second power switch circuit and the second storage element (38 b).

21. The power supply according to any of claims 15 to 18 wherein the first power switch circuit selectively switches current from the rectifier circuit (37) to the first storage element (38 a) in response to a voltage at the first storage element (38 a), and wherein the second power switch circuit selectively switches current from the rectifier circuit (37) to the second storage element (38 b) in response to a voltage at the second storage element (38 b).

22. The power supply according to any of claims 15 to 21 wherein the first and second storage elements (38 a, 38 b) are structured to provide power to the first and second electrical components such that the first electrical component has a higher capacitance than the second electrical component.

23. The power supply according to claim 22 wherein the first storage element (38 a) comprises:
a first split first storage element; and
a second split first storage element.

24. The power supply according to claim 23 wherein the power switch unit comprises:
a first power switch circuit that selectively switches current from the rectifier circuit (37) to the first split first storage element; and
a second power switch circuit that selectively switches current from the rectifier circuit (37) to the second split first storage element.

25. The power supply according to claim 23 or 24 wherein the reverse current inhibiting unit comprises:
a first diode (42 a) coupled between the first power switch circuit and the first split first storage element; and
a second diode (42 b) coupled between the second power switch circuit and the second split first storage element.

26. The power supply according to any of claims 23 to 25 wherein the first power switch circuit selectively switches current from the rectifier circuit (37) to the first split first storage element in response to a voltage at the first split first storage element, and wherein the second power switch circuit selectively switches current from the rectifier circuit (37) to the second split first storage element in response to a voltage at the second split first storage element.

27. The power supply according to any of claims 23 to 26 wherein the first split first storage element and the second split first storage element are structured to provide power to at least one mechanical adjusting mechanism.

28. The power supply according to any of claims 23 to 27 wherein the first split first storage element is structured to supply power to a transmission adjusting mechanism, and wherein the second split first storage element is structured to supply power to a suspension adjusting mechanism.

29. The power supply according to any of claims 23 to 28 wherein the second storage element (38 b) is structured to provide power to a microprocessor.

30. The power supply according to claim 22 wherein the second storage element (38 b) comprises:
a first split second storage element; and
a second split second storage element.

31. The power supply according to claim 23 wherein the power switch unit comprises:
a first power switch circuit that selectively switches current from the rectifier circuit (37) to the first split second storage element; and
a second power switch circuit that selectively switches current from the rectifier circuit (37) to the second split second storage element.

32. The power supply according to claim 31 wherein the reverse current inhibiting unit comprises:
a first diode coupled between the first power switch circuit and the first split second storage element; and
a second diode coupled between the second power switch circuit and the second split second storage element.

33. The power supply according to claim 31 or 32 wherein the first power switch circuit selectively switches current from the rectifier circuit (37) to the first split second storage element in response to a voltage at the first split second storage element, and wherein the second power switch circuit selectively switches current from the rectifier circuit (37) to the second split second storage element in response to a voltage at the second split second storage element.

34. The power supply according to claim 24 wherein the first split second storage element is structured to provide power to a microprocessor.

35. The power supply according to claim 34 wherein the second split second storage element is structured to provide power to a sensor element.

36. The power supply according to claim 34 or 35 wherein the first storage element (38 a) is structured to provide power to a mechanical adjusting mechanism.

## Patentansprüche

1. Stromversorgung für ein Fahrrad, umfassend:
ein erstes Speicherelement (38a), so aufgebaut, um Strom, welcher von einer Wechselstromquelle (19) kommt, zum Versorgen mit Strom einer ersten elektrischen Komponente zu empfangen; und
ein zweites Speicherelement (38b), so aufgebaut, um Strom, welcher von einer Wechselstromquelle (19) kommt, zum Versorgen mit Strom einer zweiten elektrischen Komponente zu empfangen,
**dadurch gekennzeichnet, dass** die Stromversorgung des Weiteren eine Stromsperreinheit (42) umfasst, welche so aufgebaut ist, um zu verhindern, dass Strom vom ersten Speicherelement zum zweiten Speicherelement übertragen wird.

2. Stromversorgung nach Anspruch 1, wobei die Stromsperreinheit so aufgebaut ist, um zu verhindern, dass Strom vom zweiten Speicherelement (38b) zum ersten Speicherelement übertragen wird.

3. Stromversorgung nach einem der vorangehenden Ansprüche, des Weiteren umfassend einen Gleichrichterstromkreis (37), welcher den Wechselstrom, der von der Wechselstromquelle empfangen wird, in einen Gleichstrom umwandelt, wobei der Gleichrichterstromkreis betrieblich gekoppelt ist, um Strom zum ersten Speicherelement (38a) und zum zweiten Speicherelement (38b) einzuspeisen.

4. Stromversorgung nach Anspruch 3, des Weiteren umfassend eine Rückstromsperreinheit, welche betrieblich zwischen dem ersten Speicherelement (38a) und dem zweiten Speicherelement (38b) geschaltet ist, um den Strom daran zu hindern, von entweder dem ersten Speicherelement (38a) oder dem zweiten Speicherelement (38b) zu dem jeweils anderen von entweder dem ersten Speicherelement (38a) oder dem zweiten Speicherelement (38b) zu fließen.

5. Stromversorgung nach Anspruch 4, wobei Strom vom ersten Speicherelement (38a) zum zweiten Speicherelement (38b) fließt.

6. Stromversorgung nach Anspruch 5, wobei Strom vom ersten Speicherelement (38a) zum zweiten Speicherelement (38b) durch die Rückstromsperreinheit fließt.

7. Stromversorgung nach einem der Ansprüche 4 bis 6, des Weiteren umfassend eine Stromschalteinheit, welche den Strom vom Gleichrichterschaltkreis zum ersten Speicherelement (38a) als Reaktion auf eine Spannung des ersten Speicherelements (38a) schaltet.

8. Stromversorgung nach einem der Ansprüche 4 bis 7, wobei die Rückstromsperreinheit eine Diode (42) umfasst.

9. Stromversorgung nach einem der Ansprüche 4 bis 8, wobei das erste und das zweite Speicherelement (38a, 38b) so aufgebaut sind, um Strom zu der ersten und der zweiten elektrischen Komponente zuzuführen, so dass die erste elektrische Komponente eine höhere Kapazität als die zweite elektrische Komponente aufweist.

10. Stromversorgung nach Anspruch 9, wobei das erste Speicherelement (38a) so aufgebaut ist, um Strom für einen mechanischen Anpassungsmechanismus bereit zu stellen.

11. Stromversorgung nach Anspruch 9, wobei das zweite Speicherelement (38b) so aufgebaut ist, um Strom für einen Mikroprozessor bereit zu stellen.

12. Stromversorgung nach einem der Ansprüche 4 bis 11, wobei das erste und das zweite Speicherelement (38a, 38b) den Strom vom Gleichrichterstromkreis (37) in Parallelschaltung empfangen.

13. Stromversorgung nach Anspruch 12, wobei die den Rückstrom sperrende Einheit umfasst:
eine erste Rückstromsperrschaltung, welche betriebsmäßig zwischen den Gleichrichterstromkreis (37) und das erste Speicherelement (38a) gekoppelt ist; und
eine zweite Rückstromsperrschaltung, welche betriebsmäßig zwischen den Gleichrichterstromkreis (37) und das zweite Speicherelement (38b) gekoppelt ist.

14. Stromversorgung nach Anspruch 12 oder 13, wobei die erste Rückstromsperrschaltung eine erste Diode umfasst und wobei die zweite Rückstromsperrschaltung eine zweite Diode umfasst.

15. Stromversorgung nach einem der Ansprüche 12 bis 14, des Weiteren umfassend eine Stromschalteinheit, welche selektiv den Strom vom Gleichrichterstromkreis (37) zu wenigstens einem der Gruppe der Speicherelemente, bestehend aus dem ersten Speicherelement (38a) und dem zweiten Speicherelement (38b), schaltet.

16. Stromversorgung nach Anspruch 15, wobei die Rückstromsperreinheit die Stromschaltereinheit umfasst.

17. Stromversorgung nach Anspruch 15 oder 16, des Weiteren umfassend eine Spannungsstabilisierungsschaltung, welche mit wenigstens einem der Gruppe der Speicherelemente, bestehend aus dem ersten Speicherelement (38a) und dem zweiten Speicherelement (38b), gekoppelt ist.

18. Stromversorgung nach einem der Ansprüche 15 bis 17, wobei die Stromschalteinheit umfasst:
eine erste Stromschaltschaltung, welche selektiv Strom vom Gleichrichterstromkreis (37) auf das erste Speicherelement (38a) schaltet; und
eine zweite Stromschaltschaltung, welche selektiv Strom vom Gleichrichterstromkreis (37) auf das zweite Speicherelement (38b) schaltet.

19. Stromversorgung nach einem der Ansprüche 15 bis 18, wobei die Rückstromsperreinheit eine Diode (42) umfasst, welche zwischen die Stromschalteinheit und wenigstens einem der Gruppe der Speicherelemente, bestehend aus dem ersten Speicherelement (38a) und dem zweiten Speicherelement (38b), gekoppelt ist.

20. Stromversorgung nach einem der Ansprüche 15 bis 18, wobei die Rückstromsperreinheit umfasst:
eine erste Diode (42a), gekoppelt zwischen die erste Stromschaltschaltung und das erste Speicherelement (38a); und
eine zweite Diode (42b), gekoppelt zwischen die zweite Stromschaltschaltung und das zweite Speicherelement (38b).

21. Stromversorgung nach einem der Ansprüche 15 bis 18, wobei die erste Stromschaltschaltung selektiv Strom vom Gleichrichterstromkreis (37) zum ersten Speicherelement (38a) als Reaktion auf eine Spannung am ersten Speicherelement (38a) schaltet und wobei die zweite Stromschaltschaltung selektiv Strom vom Gleichrichterstromkreis (37) zum zweiten Speicherelement (38b) als Reaktion auf eine Spannung am zweiten Speicherelement (38b) schaltet.

22. Stromversorgung nach einem der Ansprüche 15 bis 21, wobei das erste und das zweite Speicherelement (38a, 38b) so aufgebaut sind, um Strom zu der ersten und der zweiten elektrischen Komponente zuzuführen, so dass die erste elektrische Komponente eine höhere Kapazität als die zweite elektrische Komponente aufweist.

23. Stromversorgung nach Anspruch 22, wobei das erste Speicherelement (38a) umfasst:
ein erstes abgetrenntes erstes Speicherelement; und
ein zweites abgetrenntes erstes Speicherelement.

24. Stromversorgung nach Anspruch 23, wobei die Stromschalteinheit umfasst:
eine erste Stromschaltschaltung, welche selektiv Strom vom Gleichrichterstromkreis (37) auf das erste abgetrennte erste Speicherelement schaltet; und
eine zweite Stromschaltschaltung, welche selektiv Strom vom Gleichrichterstromkreis (37) auf das zweite abgetrennte erste Speicherelement schaltet.

25. Stromversorgung nach Anspruch 23 oder 24, wobei die Rückstromsperreinheit umfasst:
eine erste Diode (42a), gekoppelt zwischen die erste Stromschaltschaltung und das erste abgetrennte erste Speicherelement; und
eine zweite Diode (42b), gekoppelt zwischen die zweite Stromschaltschaltung und das zweite abgetrennte erste Speicherelement.

26. Stromversorgung nach einem der Ansprüche 23 bis 25, wobei die erste Stromschaltschaltung selektiv Strom vom Gleichrichterstromkreis (37) zum ersten abgetrennten ersten Speicherelement als Reaktion auf eine Spannung am ersten abgetrennten ersten Speicherelement schaltet und wobei die zweite Stromschaltschaltung selektiv Strom vom Gleichrichterstromkreis (37) zum zweiten abgetrennten ersten Speicherelement als Reaktion auf eine Spannung am zweiten abgetrennten ersten Speicherelement schaltet.

27. Stromversorgung nach einem der Ansprüche 23 bis 26, wobei das erste abgetrennte erste Speicherelement und das zweite abgetrennte erste Speicherelement so aufgebaut sind, um Strom für wenigstens einen mechanischen Anpassungsmechanismus bereit zu stellen.

28. Stromversorgung nach einem der Ansprüche 23 bis 27, wobei das erste abgetrennte erste Speicherelement so aufgebaut ist, um Strom für einen Gangschaltungsanpassungsmechanismus bereit zu stellen, und wobei und das zweite abgetrennte erste Speicherelement so aufgebaut ist, um Strom für einen Federungsanpassungsmechanismus bereit zu stellen.

29. Stromversorgung nach einem der Ansprüche 23 bis 28, wobei das zweite Speicherelement (38b) so aufgebaut ist, um Strom für einen Mikroprozessor bereit zu stellen.

30. Stromversorgung nach Anspruch 22, wobei das zweite Speicherelement (38b) umfasst:
ein erstes abgetrenntes zweites Speicherelement; und
ein zweites abgetrenntes zweites Speicherelement.

31. Stromversorgung nach Anspruch 23, wobei die Stromschalteinheit umfasst:
eine erste Stromschaltschaltung, welche selektiv Strom vom Gleichrichterstromkreis (37) auf das erste abgetrennte zweite Speicherelement schaltet; und
eine zweite Stromschaltschaltung, welche selektiv Strom vom Gleichrichterstromkreis (37) auf das zweite abgetrennte zweite Speicherelement schaltet.

32. Stromversorgung nach Anspruch 31, wobei die Rückstromsperreinheit umfasst:
eine erste Diode, gekoppelt zwischen die erste Stromschaltschaltung und das erste abgetrennte zweite Speicherelement; und
eine zweite Diode, gekoppelt zwischen die zweite Stromschaltschaltung und das zweite abgetrennte zweite Speicherelement.

33. Stromversorgung nach Anspruch 31 oder 32, wobei die erste Stromschaltschaltung selektiv Strom vom Gleichrichterstromkreis (37) zum ersten abgetrennten zweiten Speicherelement als Reaktion auf eine Spannung am ersten abgetrennten zweiten Speicherelement schaltet und wobei die zweite Stromschaltschaltung selektiv Strom vom Gleichrichterstromkreis (37) zum zweiten abgetrennten zweiten Speicherelement als Reaktion auf eine Spannung am zweiten abgetrennten zweiten Speicherelement schaltet.

34. Stromversorgung nach Anspruch 24, wobei das erste abgetrennte zweite Speicherelement so aufgebaut ist, um Strom für einen Mikroprozessor bereit zu stellen.

35. Stromversorgung nach Anspruch 34, wobei das zweite abgetrennte zweite Speicherelement so aufgebaut ist, um Strom für ein Sensorelement bereit zu stellen.

36. Stromversorgung nach Anspruch 34 oder 35, wobei das erste Speicherelement (38a) so aufgebaut ist, um Strom für einen mechanischen Anpassungsmechanismus bereit zu stellen.

## Revendications

1. Alimentation électrique pour bicyclette comprenant :
un premier élément de stockage (38a) structuré afin de recevoir de l'énergie de la part d'une alimentation électrique en CA (19) destinée à fournir de l'énergie à un premier composant électrique ; et
un second élément de stockage (38b) structuré afin de recevoir de l'énergie de la part de l'alimentation électrique en CA (19) destinée à fournir de l'énergie à un second composant électrique,
**caractérisée en ce que** l'alimentation électrique comprend en outre une unité empêchant toute alimentation électrique (42) structurée afin d'empêcher toute communication d'énergie entre le premier élément de stockage et le second composant électrique.

2. Alimentation électrique selon la revendication 1, dans laquelle l'unité empêchant toute alimentation électrique est structurée afin d'empêcher toute communication d'énergie entre le second élément de stockage (38b) et le premier composant électrique.

3. Alimentation électrique selon l'une quelconque des revendications précédentes, comprenant en outre un circuit redresseur (37) qui convertit le courant CA reçu de la part de l'alimentation électrique en CA en courant CC, dans laquelle le circuit redresseur (37) est couplé de manière opérationnelle afin de fournir de l'énergie au premier élément de stockage (38a) et au second élément de stockage (38b).

4. Alimentation électrique selon la revendication 3, comprenant en outre une unité empêchant tout courant inverse couplée de manière opérationnelle entre le premier élément de stockage (38a) et le second élément de stockage (38b) de façon à empêcher tout courant de circuler entre l'un du premier élément de stockage (38a) et du second élément de stockage (38b) et l'autre du premier élément de stockage (37a) et du second élément de stockage (38b).

5. Alimentation électrique selon la revendication 4, dans laquelle un courant circule entre le premier élément de stockage (38a) et le second élément de stockage (38b).

6. Alimentation électrique selon la revendication 5, dans laquelle un courant circule entre le premier élément de stockage (38a) et le second élément de stockage (38b) à travers l'unité empêchant tout courant inverse.

7. Alimentation électrique selon l'une quelconque des revendications 4 à 6, comprenant en outre une unité de commutation d'alimentation qui commute sélectivement le courant entre le circuit redresseur et le premier élément de stockage (38a) en réponse à une tension du premier élément de stockage (38a).

8. Alimentation électrique selon l'une quelconque des revendications 4 à 7, dans laquelle l'unité empêchant tout courant inverse comprend une diode (42).

9. Alimentation électrique selon l'une quelconque des revendications 4 à 8, dans laquelle le premier et le second éléments de stockage (38a, 38b) sont structurés afin de fournir de l'énergie au premier et au second composants électriques afin que le premier composant électrique possède une capacitance supérieure au second composant électrique.

10. Alimentation électrique selon la revendication 9, dans laquelle le premier élément de stockage (38a) est structuré afin de fournir de l'énergie à un mécanisme de réglage mécanique.

11. Alimentation électrique selon la revendication 9, dans laquelle le second élément de stockage (38b) est structuré afin de fournir de l'énergie à un microprocesseur.

12. Alimentation électrique selon l'une quelconque des revendications 4 à 11, dans laquelle le premier et le second éléments de stockage (38a, 38b) reçoivent du courant de la part du circuit redresseur (37) en parallèle.

13. Alimentation électrique selon la revendication 12, dans laquelle l'unité empêchant tout courant inverse comprend :
un premier circuit empêchant tout courant inverse couplé de manière opérationnelle entre le circuit redresseur (37) et le premier élément de stockage (38a) ; et
un second circuit empêchant tout courant inverse couplé de manière opérationnelle entre le circuit redresseur (37) et le second élément de stockage (38b).

14. Alimentation électrique selon la revendication 12 ou 13, dans laquelle le premier circuit empêchant tout courant inverse comprend une première diode, et dans laquelle le second circuit empêchant tout courant inverse comprend une seconde diode.

15. Alimentation électrique selon l'une quelconque des revendications 12 à 14, comprenant en outre une unité de commutation d'alimentation qui commute sélectivement le courant entre le circuit redresseur (37) et au moins l'un du premier élément de stockage (38a) et du second élément de stockage (38b).

16. Alimentation électrique selon la revendication 15, dans laquelle l'unité empêchant tout courant inverse comprend l'unité de commutation d'alimentation.

17. Alimentation électrique selon la revendication 15 ou 16, comprenant en outre un circuit de stabilisation de tension couplé à au moins l'un du premier élément de stockage (38a) et du second élément de stockage (38b).

18. Alimentation électrique selon l'une quelconque des revendications 15 à 17, dans laquelle l'unité de commutation d'alimentation comprend :
un premier circuit de commutation d'alimentation qui commute sélectivement le courant entre le circuit redresseur (37) et le premier élément de stockage (38a) ; et
un second circuit de commutation d'alimentation qui commute sélectivement le courant entre le circuit redresseur (37) et le second élément de stockage (38b).

19. Alimentation électrique selon l'une quelconque des revendications 15 à 18, dans laquelle l'unité empêchant tout courant inverse comprend une diode (42) couplée entre l'unité de commutation d'alimentation et au moins l'un du premier élément de stockage (38a) et du second élément de stockage (38b).

20. Alimentation électrique selon l'une quelconque des revendications 15 à 18, dans laquelle l'unité empêchant tout courant inverse comprend :
une première diode (42a) couplée entre le premier circuit de commutation d'alimentation et le premier élément de stockage (38a) ; et
une seconde diode (42b) couplée entre le second circuit de commutation d'alimentation et le second élément de stockage (38b).

21. Alimentation électrique selon l'une quelconque des revendications 15 à 18, dans laquelle le premier circuit de commutation d'alimentation commute sélectivement le courant entre le circuit redresseur (37) et le premier élément de stockage (38a) en réponse à une tension au niveau du premier élément de stockage (38a), et dans laquelle le second circuit de commutation d'alimentation commute sélectivement le courant entre le circuit redresseur (37) et le second élément de stockage (38b) en réponse à une tension au niveau du second élément de stockage (38b).

22. Alimentation électrique selon l'une quelconque des revendications 15 à 21, dans laquelle le premier et le second éléments de stockage (38a, 38b) sont structurés afin de fournir de l'énergie au premier et au second composants électriques afin que le premier composant électrique possède une capacitance supérieure au second composant électrique.

23. Alimentation électrique selon la revendication 22, dans laquelle le premier élément de stockage (38a) comprend :
un premier premier élément de stockage à fente ; et
un second premier élément de stockage à fente.

24. Alimentation électrique selon la revendication 23, dans laquelle l'unité de commutation d'alimentation comprend :
un premier circuit de commutation d'alimentation qui commute sélectivement le courant entre le circuit redresseur (37) et le premier premier élément de stockage à fente ; et
un second circuit de commutation d'alimentation qui commute le courant entre le circuit redresseur (37) et le second premier élément de stockage à fente.

25. Alimentation électrique selon la revendication 23 ou 24, dans laquelle l'unité empêchant tout courant inverse comprend :
une première diode (42a) couplée entre le premier circuit de commutation d'alimentation et le premier premier élément de stockage à fente ; et
une seconde diode (42b) couplée entre le second circuit de commutation d'alimentation et le second premier élément de stockage à fente.

26. Alimentation électrique selon l'une quelconque des revendications 23 à 25, dans laquelle le premier circuit de commutation d'alimentation commute sélectivement le courant entre le circuit redresseur (37) et le premier premier élément de stockage à fente en réponse à une tension au niveau du premier premier élément de stockage à fente, et dans laquelle le second circuit de commutation d'alimentation commute sélectivement le courant entre le circuit redresseur (37) et le second premier élément de stockage à fente en réponse à une tension au niveau du second premier élément de stockage à fente.

27. Alimentation électrique selon l'une quelconque des revendications 23 à 26, dans laquelle le premier premier élément de stockage à fente et le second premier élément de stockage à fente sont structurés afin de fournir de l'énergie à au moins un mécanisme de réglage mécanique.

28. Alimentation électrique selon l'une quelconque des revendications 23 à 27, dans laquelle le premier premier élément de stockage à fente est structuré afin de fournir de l'énergie à un mécanisme de réglage de transmission, et dans laquelle le second premier élément de stockage est structuré afin de fournir de l'énergie à un mécanisme de réglage de suspension.

29. Alimentation électrique selon l'une quelconque des revendications 23 à 28, dans laquelle le second élément de stockage (38b) est structuré afin de fournir de l'énergie à un microprocesseur.

30. Alimentation électrique selon la revendication 22, dans laquelle le second élément de stockage (38b) comprend :
un premier second élément de stockage à fente ; et
un second second élément de stockage à fente.

31. Alimentation électrique selon la revendication 23, dans laquelle l'unité de commutation d'alimentation comprend :
un premier circuit de commutation d'alimentation qui commute sélectivement le courant entre le circuit redresseur (37) et le premier second élément de stockage à fente ; et
un second circuit de commutation d'alimentation qui commute sélectivement le courant entre le circuit redresseur (37) et le second second élément de stockage à fente.

32. Alimentation électrique selon la revendication 31, dans laquelle l'unité empêchant tout courant inverse comprend :
une première diode couplée entre le premier circuit de commutation d'alimentation et le premier second élément de stockage à fente ; et
une seconde diode couplée entre le second circuit de commutation d'alimentation et le second second élément de stockage à fente.

33. Alimentation électrique selon la revendication 31 ou 32, dans laquelle le premier circuit de commutation d'alimentation commute sélectivement le courant entre le circuit redresseur (37) et le premier second élément de stockage à fente en réponse à une tension au niveau du premier second élément de stockage à fente, et dans laquelle le second circuit de commutation d'alimentation commute sélectivement le courant entre le circuit redresseur (37) et le second second élément de stockage à fente en réponse à une tension au niveau du second second élément de stockage à fente.

34. Alimentation électrique selon la revendication 24, dans laquelle le premier second élément de stockage à fente est structuré afin de fournir de l'énergie à un microprocesseur.

35. Alimentation électrique selon la revendication 34, dans laquelle le second second élément de stockage à fente est structuré afin de fournir de l'énergie à élément de capteur.

36. Alimentation électrique selon la revendication 34 ou 35, dans laquelle le premier élément de stockage (38a) est structuré afin de fournir de l'énergie à un mécanisme de réglage mécanique.
